# EUROPEAN PATENT APPLICATION

(11) **EP 2 738 918 A2**
(43) Date of publication of application: **04.06.2014**
(21) Application number: 13180538.4
(22) Date of filing: 15.08.2013
(51) Int. Cl.: H02K 5/04, H02K 11/00, H02K 7/14

(54) **Fan system**

(30) Priority: 30.11.2012 CN 201220650812 U
(71) Applicant: Zhongshan Broad-Ocean Motor Co., Ltd., Guangdong 528400 (CN)
(72) Inventor: Tang, Songfa, Zhongshan Guangdong 528400 (CN); Liu, Xiao, Zhongshan Guangdong 528400 (CN)
(74) Representative: Hryszkiewicz, Danuta

(57) **Abstract**

A fan system in combination with a DC brushless motor. The DC brushless motor includes: a shaft, a base, a stator assembly, a rotor assembly, a control box including a second cavity, and a circuit board. The fan system includes: a blower housing, a wind wheel, a first mounting bracket, and a second mounting bracket. The first mounting bracket is arranged at a first air inlet. The outer side of the first mounting bracket is connected to the upper end surface. The inner side of the first mounting bracket is provided with a first bearing, and the other end of the shaft is disposed on the first bearing. The second mounting bracket is arranged at a second air inlet. The outer side of the second mounting bracket is connected to the lower end surface.

## Description

The invention relates to a fan system in combination with a DC brushless motor.

Two typical methods are employed to assemble a motor and a wind wheel of a fan system. A first method is a single arm installation method, that is, a bracket is arranged on one side to install the motor and the wind wheel. However, for a high power blower and a heavy wind wheel, a supporting system has a violent vibration and a poor stability. A second method is a double arm support installation method. Although it operates steadily, the system is complicated in structure. The fan system is supported by two ends. A hollow shaft is arranged on the rotor assembly and a wire passes through a center of the hollow shaft. The method has defects of much complicated manufacturing procedure and higher cost.

In view of the above-described problems, it is one objective of the invention to provide a fan system in combination with a DC brushless motor that has advantages of steady operation, powerful driving force, simple structure, simple manufacturing technology and low manufacturing cost.

To achieve the above objective, in accordance with one embodiment of the invention, there is provided a fan system in combination with a DC brushless motor. The DC brushless motor comprises: a shaft, a base, a stator assembly, a rotor assembly, a control box comprising a second cavity, and a circuit board. The fan system comprises: a blower housing, the blower housing comprising: a first cavity, an upper end surface, a lower end surface, and an air outlet; a wind wheel, the wind wheel comprising a connecting plate; a first mounting bracket, the first mounting bracket comprising: an outer side, an inner side; and a second mounting bracket, the second mounting bracket comprising: an outer side, and an inner side.

The first cavity is arranged inside the blower housing. A first air inlet is disposed on the upper end surface of the blower housing. A second air inlet is disposed on the lower end surface of the blower housing. The first air inlet and the second air inlet are communicated with the cavity. The air outlet is communicated with the cavity.

The circuit board is arranged in the second cavity of the control box. The stator assembly is disposed on the base. The rotor assembly is disposed on a middle part of the shaft. The stator assembly is arranged inside the rotor assembly. The base is provided with a second bearing. One end of the shaft is disposed on the second bearing.

The connecting plate in disposed on a middle part of the wind wheel outside the rotor assembly.

The first mounting bracket is arranged at the first air inlet. The outer side of the first mounting bracket is connected to the upper end surface. The inner side of the first mounting bracket is provided with a first bearing. The other end of the shaft is disposed on the first bearing.

The second mounting bracket is arranged at the second air inlet. The outer side of the second mounting bracket is connected to the lower end surface. The inner side of the second mounting bracket is connected to the control box.

In a class of this embodiment, the base and the control box are arranged together and positioned in the first cavity. The inner side of the second mounting bracket is connected to the control box.

In a class of this embodiment, the control box is arranged outside the blower housing. The circuit board is arranged inside the control box and is in electric connection with the stator assembly in the first cavity through a wire. The inner side of the second mounting bracket is connected to a bottom of the base. The erection loop is attached to the bottom of the base and is fixed on the bottom of the base via a screw.

In a class of this embodiment, a flange plate is fixed outside the rotor assembly. A center hole is disposed on the connecting plate in the middle of the wind wheel. The rotor assembly is disposed in the center hole. The flange plate is connected to the connecting plate via a screw.

In a class of this embodiment, the first mounting bracket comprises a plurality of first mounting legs. The first mounting legs are distributed around the first air inlet. One end of each of the first mounting legs is connected to the upper end surface; and the other end of each of the first mounting legs is connected to each other to form a third cavity. The first bearing is arranged inside the third cavity.

In a class of this embodiment, the second mounting bracket comprises a plurality of second mounting legs. The second mounting legs are distributed around the second air inlet. One end of each of the second mounting legs is connected to the lower end surface; and the other end of each of the second mounting legs is connected to an erection loop. The erection loop is attached to the control box and is fixed on the control box by a screw.

In a class of this embodiment, an end part of the first mounting leg is provided with a strip groove, a screw passes through the strip groove and fixes the first mounting leg on the blower housing.

Advantages of the invention are summarized as follows:

1) The first mounting bracket is arranged at the first air inlet. The outer side of the first mounting bracket is connected to the upper end surface. The inner side of the first mounting bracket is provided with a first bearing. The other end of the shaft is disposed on the first bearing. The second mounting bracket is arranged at the second air inlet. The outer side of the second mounting bracket is connected to the lower end surface. The inner side of the second mounting bracket is connected to the control box. The invention is advantageous in a smooth and steady operation, powerful driving force, shorter shaft, simple structure, and simplified manufacturing procedure. Furthermore, the hollow shaft is not necessitated; external wires are employed to enter into the control box or the base through the second air inlet, thereby simplifying the wiring.

2) A flange plate is fixed outside the rotor assembly. A center hole is disposed on the connecting plate in the middle of the wind wheel. The rotor assembly is disposed in the center hole. The flange plate is connected to the connecting plate via a screw. Thus, the invention has a simple structure and easy installation.

3) The second mounting bracket comprises a plurality of second mounting legs. The second mounting legs are distributed around the second air inlet. One end of each of the second mounting legs is connected to the lower end surface; and the other end of each of the second mounting legs is connected to an erection loop. The erection loop is attached to the control box and is fixed on the control box by a screw. Thus, the invention has a simple structure, is easy to install and convenient to locating the position.

4) The first mounting bracket comprises a plurality of first mounting legs. The first mounting legs are distributed around the first air inlet. One end of each of the first mounting legs is connected to the upper end surface; and the other end of each of the first mounting legs is connected to each other to form a third cavity. The first bearing is arranged inside the third cavity. Thus, the invention is easy to install and convenient to adjust the position.

The invention is described hereinbelow with reference to the accompanying drawings, in which:

FIG. 1 is a stereogram of a fan system from one angle in accordance with one embodiment of the invention;

FIG. 2 is a stereogram of a fan system from another angle in accordance with one embodiment of the invention;

FIG. 3 is an exploded view of a fan system from one angle in accordance with one embodiment of the invention;

FIG. 4 is an exploded view of a fan system from another angle in accordance with one embodiment of the invention;

FIG. 5 is an assembly stereogram of a wind wheel, a motor, and a first mounting bracket from one angle in accordance with one embodiment of the invention;

FIG. 6 is an exploded view drawing of the invention after the assembly of the wind wheel, the motor and the first from mounting bracket from another angle;

FIG. 7 is a front view of a fan system in accordance with one embodiment of the invention;

FIG. 8 is a cross sectional view taken from line A-A of FIG. 7; and

FIG. 9 is an enlarged view of Part B-B of FIG. 8.

For further illustrating the invention, experiments detailing a fan system in combination with a DC brushless motor are described below. It should be noted that the following examples are intended to describe and not to limit the invention.

### Example 1

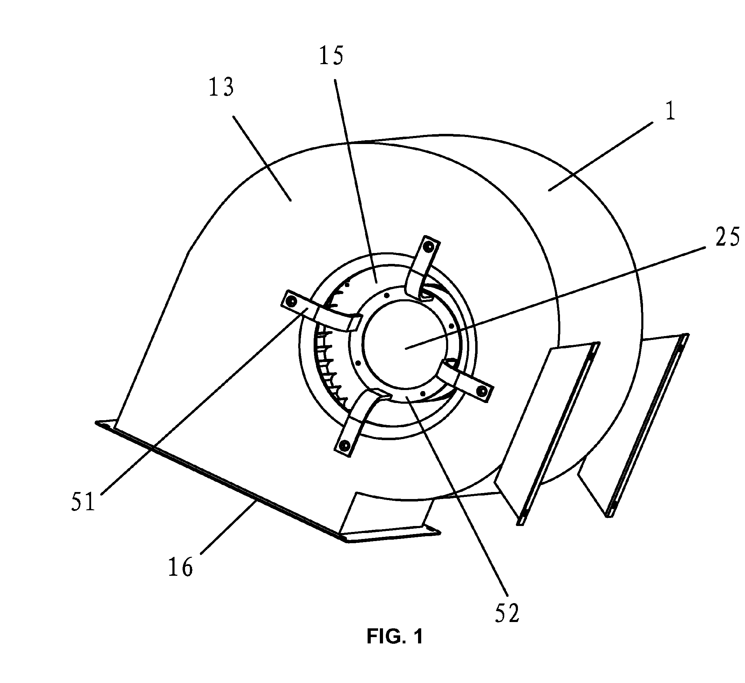

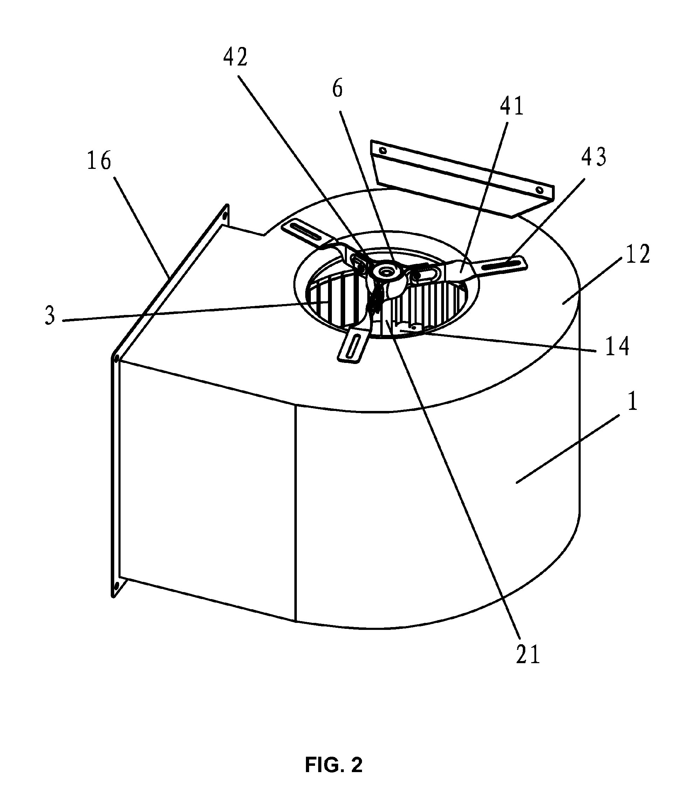

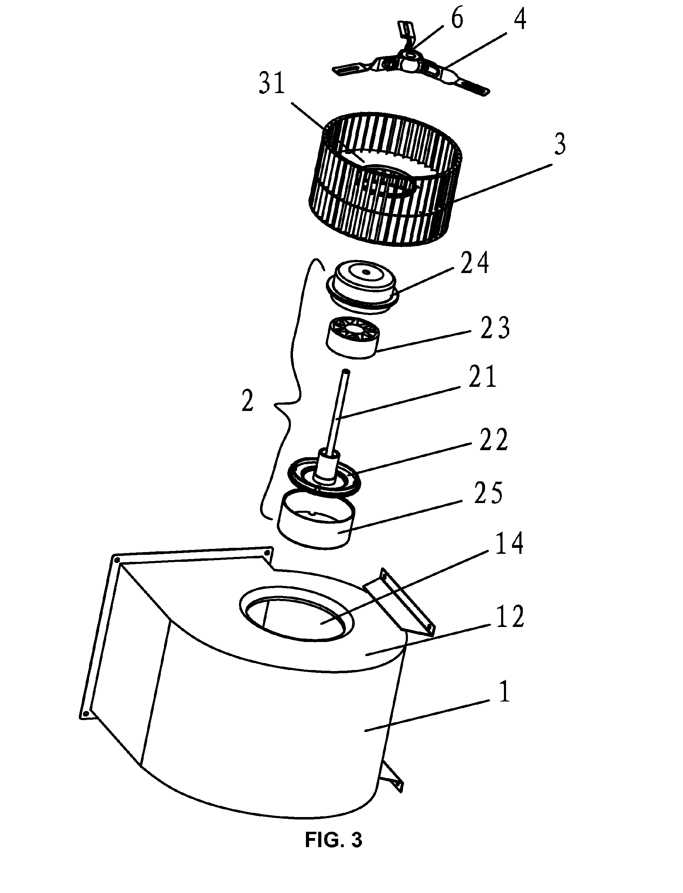

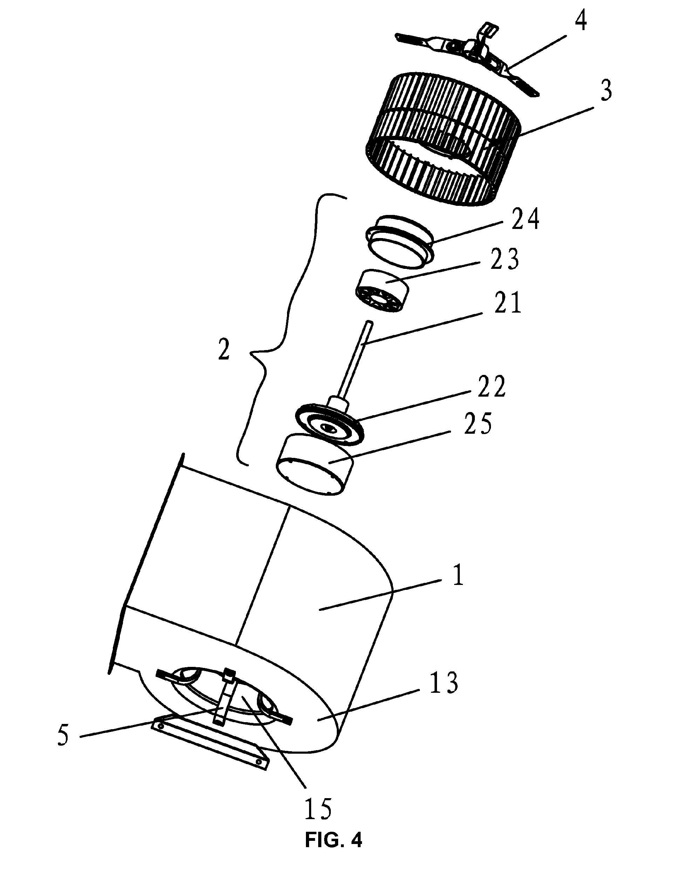

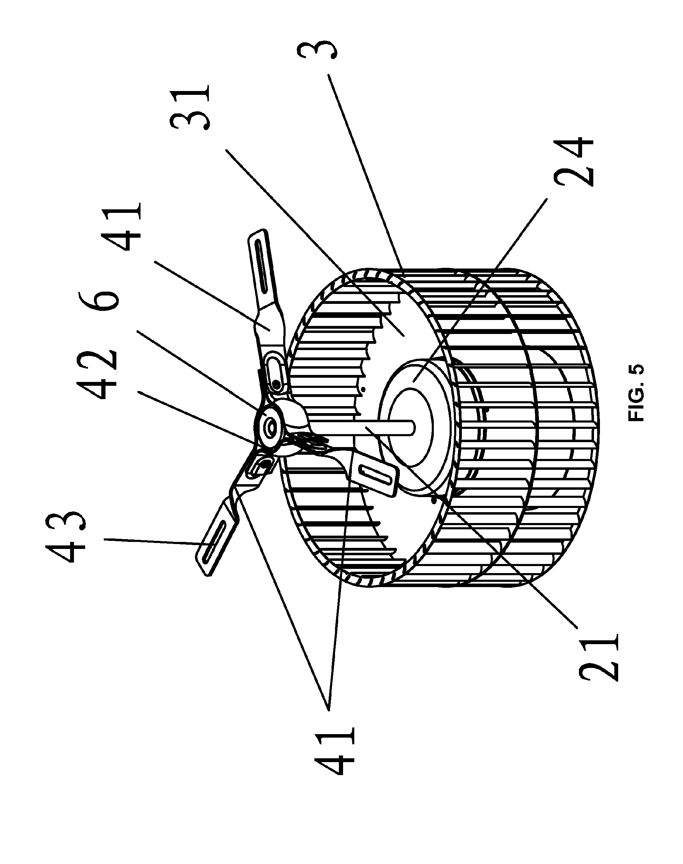

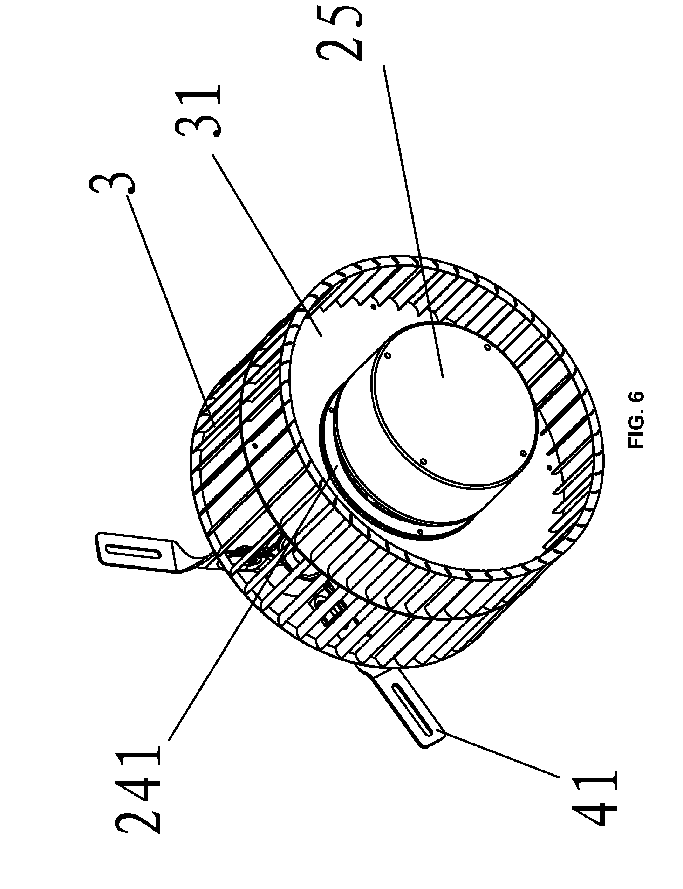

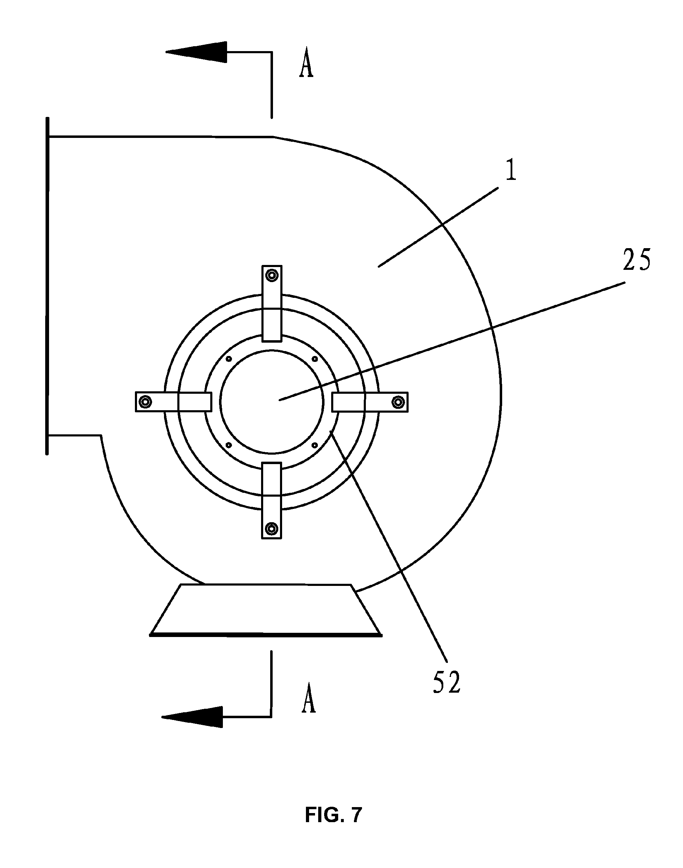

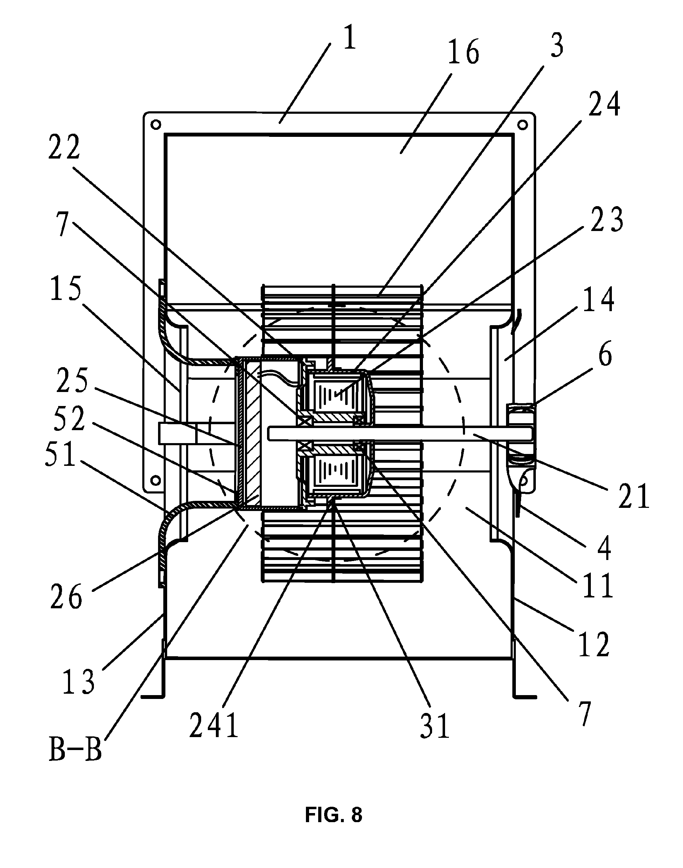

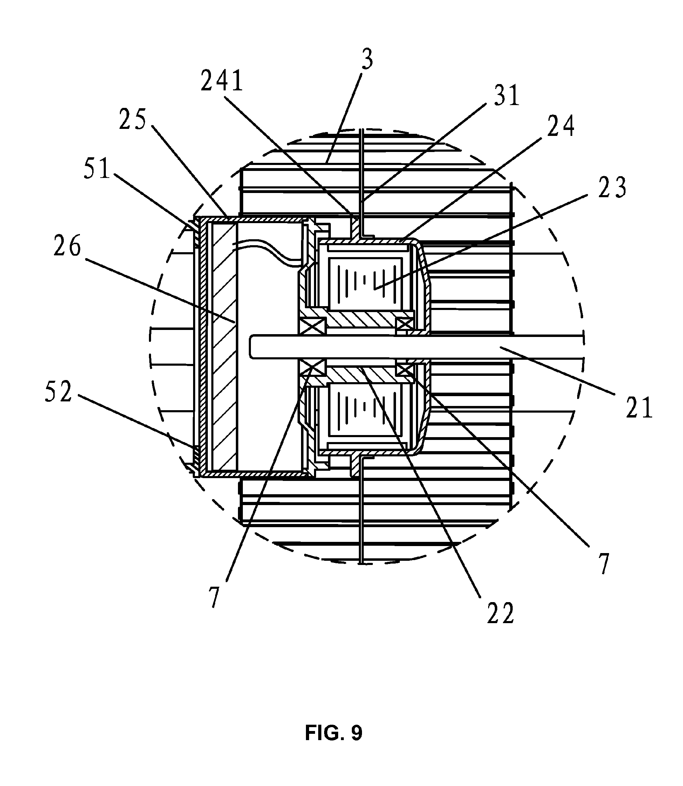

As shown in FIGS. 1-9, a fan system in combination with a DC brushless motor. The fan system comprises: a blower housing 1, a wind wheel 3, a first mounting bracket 4, and a second mounting bracket 5. The blower housing 1 is provided with a cavity 11 inside. A first air inlet 14 is arranged on an upper end surface 12 of the blower housing 1. A second air inlet 15 is arranged on a lower end surface 13 of the blower housing 1. The first air inlet 14 and the second air inlet 15 are communicated with the cavity 11. An air outlet 16 is arranged on the blower housing 1 and communicated with the cavity 11. The DC brushless motor 2 comprises: a shaft 21, a base 22, a stator assembly 23, a rotor assembly 24, a control box 25, and a circuit board 26. The circuit board 26 is arranged in a cavity of the control box 25. The stator assembly 23 is arranged on the base 22. The rotor assembly 24 is arranged on a middle part of the shaft 21. The stator assembly 23 is arranged inside the rotor assembly 24. One end of the shaft 21 is arranged on a second bearing 7 of the base 22. A connecting plate 31 in arranged in a middle of the wind wheel 3 outside the rotor assembly 24.

The first mounting bracket 4 is arranged at the first air inlet 14. An outer side of the first mounting bracket 4 is connected to the upper end surface 12. An inner side of the first mounting bracket 4 is provided with a first bearing 6. The other end of the shaft 21 is arranged on the first bearing 6. The second mounting bracket 5 is arranged at the second air inlet 15. An outer side of the second mounting bracket 5 is connected to the lower end surface 13. An inner side of the second mounting bracket 5 is connected to the control box 25.

The base 22 and the control box 25 are arranged together and positioned in the first cavity 11. The inner side of the second mounting bracket 5 is connected to the control box 25.

A flange plate 241 is fixed outside the rotor assembly 24. A center hole is disposed on the connecting plate 31 in the middle of the wind wheel 3. The rotor assembly 24 is disposed in the center hole. The flange plate 241 is connected to the connecting plate 31 via a screw.

The first mounting bracket 4 comprises a plurality of first mounting legs 41. The first mounting legs 41 are distributed around the first air inlet 14. One end of each of the first mounting legs 41 are connected to the upper end surface 12; and the other end of each of the first mounting legs 41 are connected to each other to form a third cavity 42. The first bearing 6 is arranged inside the third cavity 42.

The second mounting bracket 5 comprises a plurality of second mounting legs 51. The second mounting legs 51 are distributed around the second air inlet 15. One end of each of the second mounting legs 51 is connected to the lower end surface 13; and the other end of each of the second mounting legs 51 are connected to an erection loop 52. The erection loop 52 is attached to the control box 25 and is fixed on the control box 25 by a screw.

An end part of the first mounting leg 41 is provided with a strip groove 43. A screw passes through the strip groove 43 and fixes the first mounting leg 41 on the blower housing 1.

### Example 2

Based on the example 1, the following technical schemes are added: the control box 25 is arranged outside the blower housing 1. The circuit board 26 is arranged inside the control box 25 and is in electric connection with the stator assembly 23 in the first cavity 11 through a wire. The inner side of the second mounting bracket 5 is connected to a bottom of the base 22. The erection loop 52 is attached to the bottom of the base 22 and is fixed on the bottom of the base via a screw.

The fan system in combination with a DC brushless motor operates in a double-arm support mode. Thus, the fan system is advantageous in a steady operation, powerful driving force, simple structure, simple manufacturing technology, and low manufacturing cost.

While particular embodiments of the invention have been shown and described, it will be obvious to those skilled in the art that changes and modifications may be made without departing from the invention in its broader aspects, and therefore, the aim in the appended claims is to cover all such changes and modifications as fall within the true spirit and scope of the invention.

## Claims

1. A fan system in combination with a DC brushless motor (2), the DC brushless motor (2) comprising: a shaft (21), a base (22), a stator assembly (23), a rotor assembly (24), a control box (25) comprising a second cavity, and a circuit board (26); the fan system comprising:
a) a blower housing (1), the blower housing (1) comprising: a first cavity (11), an upper end surface (12), a lower end surface (13), and an air outlet (16);
b) a wind wheel (3), the wind wheel (3) comprising a connecting plate (31);
c) a first mounting bracket (4), the first mounting bracket (4) comprising: an outer side, an inner side; and
d) a second mounting bracket (5), the second mounting bracket (5) comprising: an outer side, and an inner side;
**characterized in that**
the first cavity (11) is arranged inside the blower housing (1); a first air inlet (14) is disposed on the upper end surface (12) of the blower housing (1); a second air inlet (15) is disposed on the lower end surface (13) of the blower housing (1); the first air inlet (14) and the second air inlet (15) are communicated with the cavity (11); the air outlet (16) is communicated with the cavity (11);
the circuit board (26) is arranged in the second cavity of the control box (25); the stator assembly (23) is disposed on the base (22); the rotor assembly (24) is disposed on a middle part of the shaft (21); the stator assembly (23) is arranged inside the rotor assembly (24); the base (22) is provided with a second bearing (7); one end of the shaft (21) is disposed on the second bearing (7);
the connecting plate (31) in disposed on a middle part of the wind wheel (3) outside the rotor assembly (24);
the first mounting bracket (4) is arranged at the first air inlet (14); the outer side of the first mounting bracket (4) is connected to the upper end surface (12); the inner side of the first mounting bracket (4) is provided with a first bearing (6); the other end of the shaft (21) is disposed on the first bearing (6); and
the second mounting bracket (5) is arranged at the second air inlet (15); the outer side of the second mounting bracket (5) is connected to the lower end surface (13); the inner side of the second mounting bracket (5) is connected to the control box (25).

2. The fan system of claim 1, **characterized in that**
the base (22) and the control box (25) are arranged together and positioned in the first cavity (11); and
the inner side of the second mounting bracket (5) is connected to the control box (25).

3. The fan system of claim 1, **characterized in that**
the control box (25) is arranged outside the blower housing (1);
the circuit board (26) is arranged inside the control box (25) and is in electric connection with the stator assembly (23) in the first cavity (11) through a wire; and
the inner side of the second mounting bracket (5) is connected to a bottom of the base (22).

4. The fan system of claim 1, **characterized in that**
a flange plate (241) is fixed outside the rotor assembly (24);
a center hole is disposed on the connecting plate (31) in the middle of the wind wheel (3); the rotor assembly (24) is disposed in the center hole; and
the flange plate (241) is connected to the connecting plate (31) via a screw.

5. The fan system of claim 2, **characterized in that**
a flange plate (241) is fixed outside the rotor assembly (24);
a center hole is disposed on the connecting plate (31) in the middle of the wind wheel (3); the rotor assembly (24) is disposed in the center hole; and
the flange plate (241) is connected to the connecting plate (31) via a screw.

6. The fan system of claim 3, **characterized in that**
a flange plate (241) is fixed outside the rotor assembly (24);
a center hole is disposed on the connecting plate (31) in the middle of the wind wheel (3); the rotor assembly (24) is disposed in the center hole; and
the flange plate (241) is connected to the connecting plate (31) via a screw.

7. The fan system of claim 4, **characterized in that**
the first mounting bracket (4) comprises a plurality of first mounting legs (41);
the first mounting legs (41) are distributed around the first air inlet (14);
one end of each of the first mounting legs (41) is connected to the upper end surface (12);
the other end of each of the first mounting legs (41) are connected to each other to form a third cavity (42); and
the first bearing (6) is arranged inside the third cavity (42).

8. The fan system of claim 5, **characterized in that**
the first mounting bracket (4) comprises a plurality of first mounting legs (41);
the first mounting legs (41) are distributed around the first air inlet (14);
one end of each of the first mounting legs (41) is connected to the upper end surface (12);
the other end of each of the first mounting legs (41) are connected to each other to form a third cavity (42); and
the first bearing (6) is arranged inside the third cavity (42).

9. The fan system of claim 6, **characterized in that**
the first mounting bracket (4) comprises a plurality of first mounting legs (41);
the first mounting legs (41) are distributed around the first air inlet (14);
one end of each of the first mounting legs (41) is connected to the upper end surface (12);
the other end of each of the first mounting legs (41) are connected to each other to form a third cavity (42); and
the first bearing (6) is arranged inside the third cavity (42).

10. The fan system of claim 4, **characterized in that**
the second mounting bracket (5) comprises a plurality of second mounting legs (51);
the second mounting legs (51) are distributed around the second air inlet (15);
one end of each of the second mounting legs (51) is connected to the lower end surface (13);
the other end of each of the second mounting legs (51) are connected to an erection loop (52); and
the erection loop (52) is attached to the control box (25) and is fixed on the control box (25) by a screw.

11. The fan system of claim 5, **characterized in that**
the second mounting bracket (5) comprises a plurality of second mounting legs (51);
the second mounting legs (51) are distributed around the second air inlet (15);
one end of each of the second mounting legs (51) is connected to the lower end surface (13);
the other end of each of the second mounting legs (51) are connected to an erection loop (52); and
the erection loop (52) is attached to the control box (25) and is fixed on the control box (25) by a screw.

12. The fan system of claim 6, **characterized in that**
the second mounting bracket (5) comprises a plurality of second mounting legs (51);
the second mounting legs (51) are distributed around the second air inlet (15);
one end of each of the second mounting legs (51) is connected to the lower end surface (13);
the other end of each of the second mounting legs (51) are connected to an erection loop (52); and
the erection loop (52) is attached to the control box (25) and is fixed on the control box (25) by a screw.

13. The fan system of claim 7, **characterized in that**
an end part of the first mounting leg (41) is provided with a strip groove (43); and
a screw passes through the strip groove (43) and fixes the first mounting leg (41) on the blower housing (1).

14. The fan system of claim 8, **characterized in that**
an end part of the first mounting leg (41) is provided with a strip groove (43); and
a screw passes through the strip groove (43) and fixes the first mounting leg (41) on the blower housing (1).

15. The fan system of claim 9, **characterized in that**
an end part of the first mounting leg (41) is provided with a strip groove (43); and
a screw passes through the strip groove (43) and fixes the first mounting leg (41) on the blower housing (1).
